# EUROPEAN PATENT SPECIFICATION

(11) **EP 1 834 758 B1**
(45) Date of publication and mention of the grant of the patent: **20.01.2010**
(21) Application number: 06125363.9
(22) Date of filing: 04.12.2006
(51) Int. Cl.: B32B 3/06, B32B 5/00

(54) **Wiping sheet**
Wischblatt
Feuille d'essuyage

(30) Priority: 07.12.2005 JP 2005353863
(43) Date of publication of application: 19.09.2007
(73) Proprietor: Rakupri Co., Ltd., Urawa-ku Saitama-shi Saitama, Saitama (JP)
(72) Inventor: Amano, Tatsuaki, Saitama Saitama (JP)
(74) Representative: Finnie, Peter John

(56) References cited:
- EP-A- 0 789 264
- WO-A-2005/030024
- US-A- 5 280 661

## Description

### Field of the Invention

The present invention relates to a wiping sheet, which is attached onto physical objects, on the spot being capable of wiping off dirt on screens of e.g., cellular phone, IT related device and television, or also camera lens and surface of CD.

### Background to the Invention

With advancing IT technologies, people have been increasingly experienced displays of television, cellular phone, and IT related device like personal computer or, optical equipment and information equipment such as digital camera and CD. These displays, camera lens and mirror surface of CD take an electrostatic charge easily, so that there have been problems that dust tends to accumulate, and that fat of finger or palm adheres to them in frequent use, thus likely to be dirty. On the other hand, there has been used a cloth of micro fibers as a wiping cloth intended to wipe dirt off from lenses of glasses etc.

However, it is troublesome to always carry such a wiping cloth together with a cellular phone, and there are many instances where the very wiping cloth cannot be found being lost in other goods actually as needed.

In order to solve such problems, the present inventors have already proposed a wiping sheet in which an adhesive surface composed of acryl based polymer sheet being capable of being adhered many times and a microfiber cloth are laminated (see, Japanese Utility Model No. 3108270). Also, there is proposed a similar invention that a sheet-like material is provided on one side of base resin film of 20-100 µm in thickness and a removable functional layer is provided on the other side (see, Japanese Patent No. 3663203). In these manners, it becomes possible that by carrying a physical object onto which such sheet is attached for use in wiping, the sheet is detached to use for wiping when needed.

However, there is a problem in Japanese Utility Model No. 3108270 that strength is insufficient and durability is poor because the polymer sheet is directly laminated with a microfiber cloth. On the other hand, there is a problem in Japanese Patent No. 3663203 that attachment onto a concavo-convex surface is difficult because flexibility is poor due to that a sheet is made of the base resin film.

As described above, regarding the conventional wiping sheets, there has been a problem in poor durability in the case where a polymer sheet is directly laminated with a microfiber cloth, and there has been a problem in poor flexibility in the case where a resin film of 20-100 µm in thickness is used as a base material.

### Summary of the Invention

The present invention has been made to solve such problems by improving the thickness of the base material, and has an object of providing a wiping sheet having sufficient flexibility, high adhesion strength, easy attachment onto a concavo-convex surface, good adhesiveness and high durability.

According to the present invention there is provided a reusable wiping sheet according to claim 1, which is ordinarily attached onto a physical object and peeled off on occasion. In the invention a microfiber cloth having a dirt wiping effect is laminated on one side of a resin film of less than 20 µm in thickness, and a polymer sheet having an adhesive effect due to suction function of bubbles is laminated on the other side.

Preferably, the polymer sheet is an acryl based polymer sheet.

Preferably, the microfiber cloth is a non-woven cloth.

The wiping sheet of the present invention is constructed as described above, thus, advantageously it can be provided at a relatively low price, is strong and durable, can be easily attached onto somewhat concave-convex surfaces owing to sufficient flexibility, possesses high adhesion strength, and can be repeatedly adhered.

### Brief Description of the Drawings

Examples of the present invention will now be described in detail with reference to the accompanying drawings, in which:
FIG. 1 is a schematic cross section of a wiping sheet of the present invention;
FIG. 2 is an explanatory view showing a state in which the wiping sheet of the present invention is adhered and maintained on a cellular phone; and,
FIG. 3 is an explanatory view showing a state in which the screen of cellular phone is wiped using the wiping sheet of the present invention.

### Detailed Description

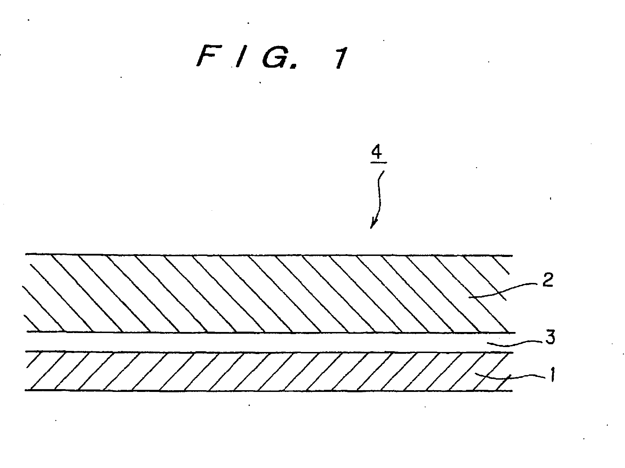

FIG. 1 is a schematic cross section of the wiping sheet in one embodiment of the present invention. In FIG. 1, reference numeral 1 is a wiping microfiber cloth, reference numeral 2 is a polymer sheet, reference numeral 3 is a resin film and reference numeral 4 is a wiping sheet. On both sides of resin film 3, an adhesive (not shown) is applied, the microfiber cloth 1 for wiping is bonded to the one side, and the polymer sheet 2 is bonded on the other side to construct the wiping sheet 4.

This wiping sheet 4 will be described briefly with regard to the construction of each part.

In the microfiber cloth 1 for wiping, each fiber thereof is as very fine as, for example, 0.001 to 0.5 deniers, further the cross section of fiber is not circular, but, for example, is triangular, and thus the resultant cloth certainly adsorbs dirt without putting force thereon and leaves little dirt. Further, in the case of non-woven cloth, dimensional stability is good in cutting or punching, and there occurs little seam fray and dust like waste fibers are less likely to generate.

As a microfiber cloth, there is listed Savinar Minimax cloth using as a yarn Belmar X manufactured by Kanebo Gosen KK. Further, as a microfiber non-woven cloth, there are listed Baifresher and Appolon manufactured by Japan Vilene Company Ltd. and "Denkitouru" also functioning as a static eliminator manufactured by the same company.

Although the thickness of microfiber cloth 1 for wiping is not particularly limited, in this embodiment, for example, the one having a thickness of about 50 µm to about 500 µm is used.

The polymer sheet 2 is a sheet of acryl polymer having fine bubbles on the surface. The polymer sheet 2, with the fine bubbles on the surface acting as suction cups, is adhered onto an opposed flat face. As an example of such polymer sheet, Serobi 555 manufactured by Taisei Laminator Co. Ltd. is listed. The polymer sheet is composed of low expansion foam having expansion ratio of about 1.5-fold, is 0.5 mm in thickness and 50 mm square in size, and exhibits peeling strength of about 0.15 kg with respect to glass.

Although the thickness of polymer sheet 2 is not particularly limited, the thicker, the higher adhesion strength is. In this embodiment, for example, the one having a thickness of about 500 µm to 800 µm is used.

Although material of resin film 3 is not particularly limited, for example, there can be used a polyester film, polyamide film, polyethylene terephthalate film and nylon film. The resin film 3 is necessary for wiping sheet 4 to have durability (strength). The larger the thickness of resin film 3, the higher strength is, but flexibility of wiping sheet 4 becomes poor. When the resin film 3 is too thick, lacks flexibility and is less adhesive, which makes an attached sheet 4 likely to peel off in the case where the thickness of polymer sheet 2 is not sufficient.

In the present embodiment, the thickness of resin film 3 is less than 20 µm, and a polyethylene terephthalate (PET) film of a thickness of, for example, 8 µm or 15µm is used so that it is flexible to be capable of attached onto a somewhat concavo-convex surface resulting in good adhesiveness while keeping a necessary strength. In this way, the thickness of polymer sheet 2 can be larger thereby to increase adhesion strength even in a given total thickness by relatively thinning the resin film 3. Also, by the increase in thickness of polymer sheet 2, the strength of wiping sheet 4 can be compensated even when the thickness of resin film 3 is decreased.

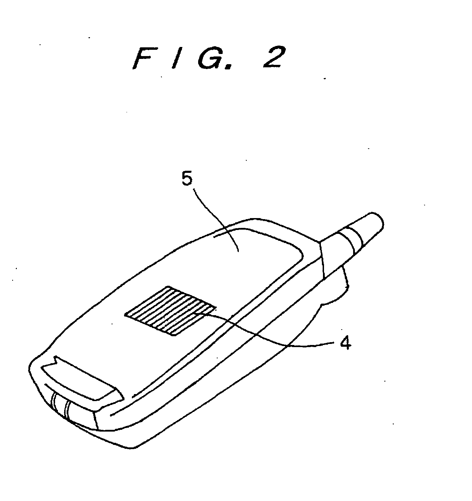

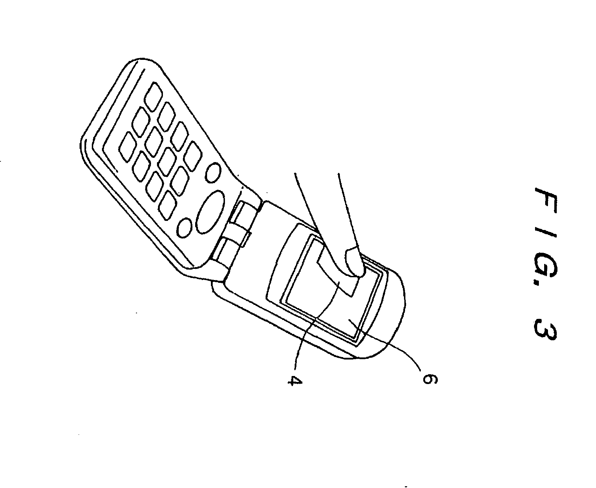

FIG. 2 and FIG. 3 show how to use the wiping sheet 4 of the present invention.

For example, in the case of use in cellular phone 5, the wiping sheet 4 is adhered and maintained by pressing the polymer sheet side thereof onto a housing of cellular phone 5 ordinarily as shown in FIG. 2 and peeled off from the housing on the occasion of wiping off dirt on screen 6, and then screen 6 is wiped by pressing the side of microfiber cloth 1 thereto as shown in FIG. 3. In this way, whenever dirt is found on screen 6, it can be wiped readily, for the screen 6 to be clean and good viewable.

Heretofore, although the case of cellular phone 5 has been described, wiping sheet 4 can be used in the same manner as in the screens of e.g., television, car navigation system, personal computer, electronic calculator, clock and camera, or lenses, and further can be used for wiping off dirt on mirror face of CD by attaching it onto a CD recorder and reproducing unit.

According to the wiping sheet of the present invention as described above, sheet 4 is usually attached onto devices somewhere not to impede operation of a user, and when dirt is adhered, the sheet 4 is peeled off instantly to wipe off the dirt, so that unpleasant fogginess and dirt can be eliminated at once, to be easy to use. Also, durability and flexibility of sheet 4, and repeatedly attachable property of polymer sheet 2 side are sufficient, and the sheet can be easily washed when it becomes dirty and thus can be used for a long period of time, which is economical. Further, company name, product name, advertisement and the like can be printed by a sublimatic printer on the microfiber cloth 1 side which is ordinarily the front face, and thus, usage as a medium for advertisement and distribution can also be thought.

The wiping sheet of the present invention can be conveniently used in widespread cellular phone, personal computer and the like, expecting a wide range of needs, and further can be used as advertising media for advertisement and distribution, which gives potential use not only in mere cellular phones and IT industries but also in wide fields of industries.

## Claims

1. A wiping sheet (4), **characterized in that** the wiping sheet comprises:
a resin film (3) of less than 20 µm thickness;
a microfiber cloth (1) laminated on one side of the resin film (3), the microfiber cloth (1) having a dirt wiping effect; and,
a polymer sheet (2) laminated on the other side of the resin film (3), wherein the polymer sheet is composed of low expansion foam having expansion ratio of 1.5-fold, is 0.5 mm in thickness and 50 mm square in size, and exhibits peeling strength of 0.15 kg with respect to glass, whereby the polymer sheet (2) has an adhesive property due to the presence of bubbles on an outer surface which provide a suction effect.

2. The wiping sheet (4) of claim 1, wherein said polymer sheet (2) is an acryl based polymer sheet.

3. The wiping sheet (4) of claim 1 or 2, wherein said microfiber cloth (1) is a non-woven cloth.

## Patentansprüche

1. Wischblatt (4) **dadurch gekennzeichnet, dass** das Wischblatt umfasst:
- einen Harzfilm (3) von weniger als 20 Mikrometer Dicke,
- ein Mikrofasertuch (1), welches auf der einen Seite des Harzfilmes (3) laminiert ist, wobei das Mikrofasertuch (1) eine schmutzabwischende Wirkung aufweist, und
- einen Polymerfilm (2), der auf der anderen Seite des Harzfilmes (3) laminiert ist, wobei der Polymerfilm aus einem Schwerschaum besteht, der ein Ausdehnungsverhältnis von 1,5 hat, 0.5 mm dick ist und 50 mm² Fläche aufweist und eine Ablösestärke von 0.15 kg in Bezug auf Glas aufweist, wobei der Polymerfilm (2) seine anhaftende Eigenschaft aufgrund des Vorhandenseins von Blasen auf der äusseren Oberfläche hat, welche einen Ansaugeffekt ausüben.

2. Wischblatt (4) gemäss Anspruch 1, bei dem der besagte Polymerfilm (2) ein Acryl-basierter Polymerfilm ist.

3. Wischblatt (4) gemäss Anspruch 1 oder 2, bei dem das Mikrofasertuch (1) ein nichtgewebtes Tuch ist.

## Revendications

1. Feuille d'essuyage (4) **caractérisée en** se que la feuille d'essuyage comprend:
- un film résineux (3) de moins que 20 micromètres en épaisseur,
- un tissu en microfibre (1) laminé sur une face du film résineux (3), où le tissu en microfibre (1) possède une qualité d'essuyage anti-tâche, et
- une feuille de polymère (2) laminée sur l'autre face du film résineux (3), où la feuille de polymère est composée d'une mousse lourde possédant un rapport d'expansion de 1,5, une épaisseur de 0,5 mm et comprend 50 mm² de surface et montre une force de décollage de 0,15 kg par rapport à du verre, où la feuille de polymère (2) à une qualité d'adhésion dû à la présence de bulles sur une surface extérieure qui donne un effet de succion.

2. Feuille d'essuyage (4) selon la revendication 1, **caractérisée en ce que** la feuille de polymère (2) est une feuille de polymère (2) basée sur de l'acrylique.

3. Feuille d'essuyage (4) selon la revendication 1 ou 2, **caractérisée en** se que le tissu en microfibre (1) est un non-tissé.
